Europäisches Patentamt

(19) European Patent Office

Office européen des brevets

(11) Publication number: **0 206 637**
**B1**

(12) **EUROPEAN PATENT SPECIFICATION**

(45) Date of publication of the patent specification:
15.11.89

(21) Application number: **86304440.0**

(22) Date of filling: **10.06.86**

(51) Int. Cl.⁴: **B 65 G  65/40,** B 65 G  65/48,
B 65 G  65/36

(54) Dispensing bin.

(30) Priority: **20.06.85  GB 8515674**

(43) Date of publication of application:
**30.12.86 Bulletin 86/52**

(45) Publication of the grant of the patent:
**15.11.89 Bulletin 89/46**

(84) Designated Contracting States:
**AT BE CH DE FR GB IT LI LU NL SE**

(56) References cited:
**DE-B-1 161 798**
**FR-A-2 085 303**

(73) Proprietor: **J. & P. MOORE (HOLDINGS) LIMITED,
"Romany", Single Street, Biggin Hill Kent, TN16
3AA (GB)**

(72) Inventor: **Moore, James, "Romany" Single Street
Biggin Hill, Kent, TN16 3AA (GB)**

(74) Representative: **Harrison, Ivor Stanley, Withers &
Rogers 4 Dyer's Building Holborn, London EC1N
2JT (GB)**

EP 0 206 637 B1

LIBER, STOCKHOLM 1989

## Description

This invention relates to a dispensing bin for aggregate, stones, sand and like material of the type including a scoop which extends longitudinally in the bin and is supported for rotation in the bin about an axis parallel to the longitudinal axis of the bin so that the scoop describes a cylindrical path in the bin.

A dispensing bin of this type is described in FR-A-2 085 303.

An object of the invention is to provide a storage bin for aggregate and like material, in which the scoop for dispensing material from the bin takes up a small proportion of the volume of the bin and allows maximum use of the available space in the bin for storage, while allowing the contents of the bin to be discharged in an easily controlled manner.

According to the invention there is provided a dispensing bin of the aforementioned type, characterised in that it includes means for oscillating the scoop about its axis of rotation so that the scoop moves in one direction through a lower part of the container to pick up material and then moves in the opposite direction to carry the material to an upper part of the bin where the contents of the scoop are delivered into a discharge conveyor extending longitudinally in the upper part of the bin.

The scoop is the only part of the equipment which comes into contact with the material to be dispensed before it is delivered into the discharge conveyor. In a preferred embodiment of the invention, the scoop has an open mouth facing circumferentially with respect to the cylindrical path of movement of the scoop, the latter being preferably defined between a pair of longitudinally-extending blades which converge in a circumferential direction away from the mouth of the scoop.

A scoop discharge device may be arranged in the upper part of the bin to be struck by the scoop as the latter reaches a position above the discharge conveyor, so that the contents of the scoop fall onto the conveyor as the direction of movement of the scoop is reversed. For example, where the scoop comprises a pair of convergent blades, the scoop may pick up material as it moves in one circumferential direction within the lower part of the bin, the material becoming wedged between the convergent blades, and the scoop discharge device may be positioned so that it strikes the narrow end of the scoop as the latter moves in the opposite circumferential direction in the upper part of the bin, effectively ejecting the material from the scoop into the conveyor. The scoop may be open at its narrow end so that the discharge device enters the scoop to eject the material from the scoop.

The discharge conveyor may comprise an auger. Since the scoop oscillates within the bin, the auger may be operated periodically to coincide with the discharge of material from the scoop into the conveyor, so that the conveyor delivers batches of material from the bin. The auger conveyor may deliver material discharged from the bin into a mixing drum of a concrete mixer.

In a preferred embodiment of the invention, the scoop is carried by two arms extending in an arc concentric with the axis of rotation of the scoop at opposite ends of the bin. The two scoop arms are preferably supported by two wheels rotatable about the axis of rotation of the scoop and counterweighted to balance the weight of the scoop and the scoop arms. The wheels carrying the scoop arms may be housed in respective compartments at opposite ends of the bin, sealed from the part of the bin used for storage of the aggregate or like material.

The invention will be further described, by way of example only, with reference to the accompanying drawings, in which:

Figure 1 is a diagrammatic longitudinal sectional view of a dispensing bin according to one embodiment of the invention;

Figure 2 is a diagrammatic cross-section taken on the line II - II in Figure 1, showing the scoop of the bin in a lower position, and

Figures 3 and 4 are cross-sectional views corresponding to Figure 2, showing the scoop of the bin in an intermediate and an upper position ,respectively, in the bin.

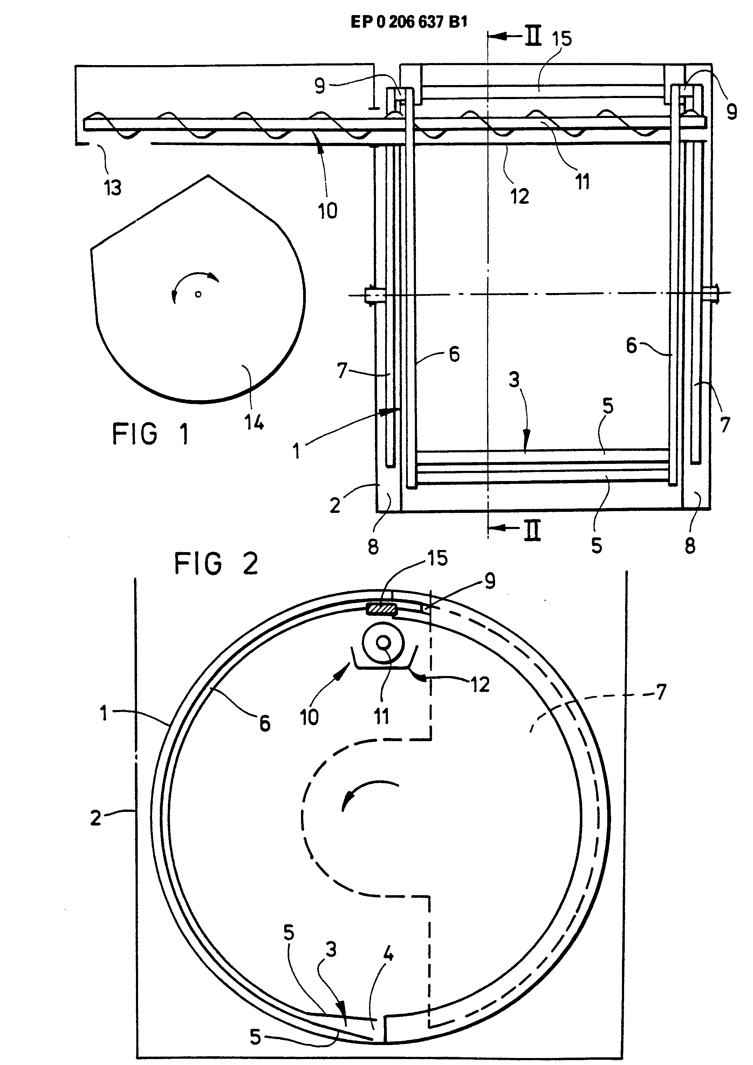

Referring to Figures 1 and 2, the dispensing bin according to the invention is intended for aggregate, stones and like material, and comprises a generally cylindrical container 1 arranged with its axis horizontal and supported within a box-like casing 2 of rectangular or square cross-section. The container 1 is used for storage of aggregate, stones or like material, and at least some of the void spaces between the container 1 and the casing 2 may be used for the storage of other materials, such as, for example, cement.

A scoop 3 extends longitudinally within the bin container 1 close to the wall of the container 1 and is supported for angular movement about the axis of the container 1 so that, upon rotation about this axis, the scoop describes a cylindrical path within the container 1.

The scoop 3 has an open mouth 4 facing circumferentially with respect to the cylindrical path of movement of the scoop 3 within container 1. The scoop 3 is defined between a pair of longitudinally-extending blades 5 which converge in a circumferential direction away from the mouth 4 of the scoop, the scoop 3 being, in this example, also open at its narrow end opposite the mouth 4.

The two blades 5 which define the scoop 4 are supported at their opposite ends by a pair of scoop arms 6 which extend in an arc concentric with the axis of rotation of the scoop, that is, the axis of the cylindrical bin container 1. Each arcuate scoop arm 6 is supported in cantilever fashion from a respective wheel 7 rotatable about the axis of the container 1.

The respective wheels 7 are housed in respective compartments 8 externally of the container 1, at opposite axial ends of the latter. Each arcuate scoop arm 6 is connected to its associated wheel 7 in cantilever fashion by a short axially-extending root 9 which projects into the container 1, so that the scoop arms 6 carrying the scoop 3 are located within the container 1, while the two wheels 7 which carry the scoop arms 6 are housed externally of the container 1.

The two wheels 7 are of segmental or truncated disc shape and are so arranged or counterweighted that they counterbalance the weight of the scoop arms 6 and the scoop 3.

A discharge conveyor 10 is located in the upper part of the container 1 and comprises an auger 11 extending longitudinally in the container 1 above a longitudinally extending conveyor chute 12. The conveyor 10 projects beyond one end of the bin, the chute 12 having a discharge opening 13 in its base for delivering material into a concrete mixer drum 14 located externally of this end of the bin.

The cylindrical path of movement described by the scoop 3 on rotation about the axis of the container 1 extends above the conveyor 10. A discharge device 15 in the form of a longitudinally-extending bar is located above the conveyor 10 at or close to the uppermost position of the scoop 3 in its cylindrical path of movement about its axis of rotation.

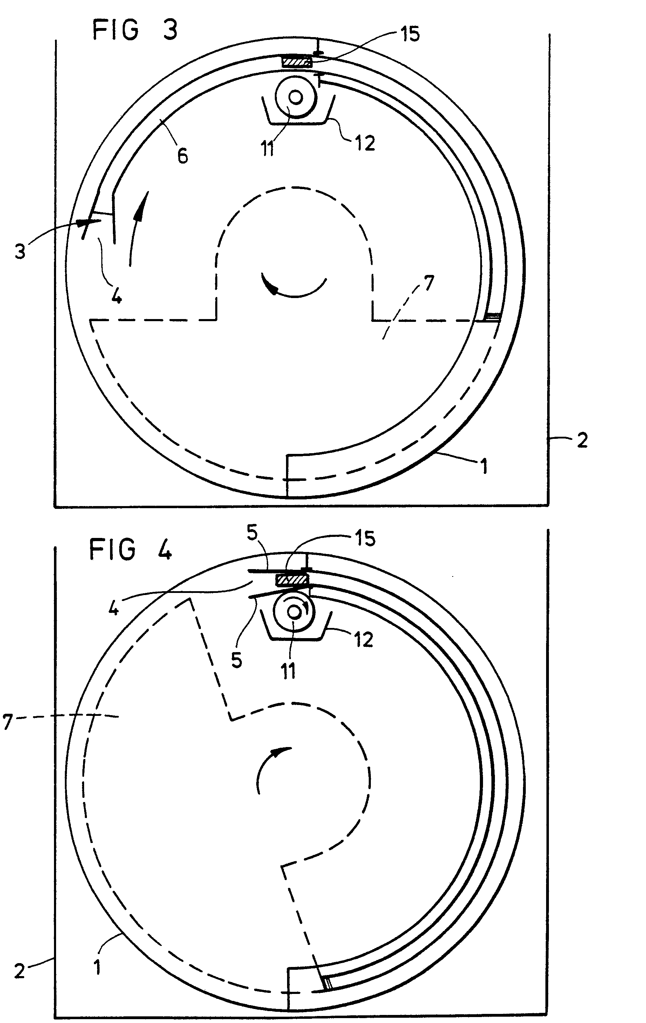

The operation of the dispensing bin will be described with reference to Figures 2 to 4. The wheels 7 supporting the scoop 3 are driven, by any convenient motor arrangement, so as to execute periodic angular oscillations about the axis of rotation of the scoop 3, coinciding with the axis of the container 1. The amplitude of this oscillation is typically 210°. As the two wheels 7 are oscillated in their respective compartments 8, the scoop arms 6 move the scoop 3 within the container 1 along a part-cylindrical path. In a first part of each cycle, in which the scoop 3 moves anti-clockwise (as viewed in Figure 2), the scoop moves into the lower part of the container with its mouth 4 leading, so that material in the container 1 becomes wedged between the blades 5 which form the scoop 3. The movement of the scoop 3 is then reversed in the following part of the oscillatory cycle of the wheels 7, carrying the material trapped in the mouth of the scoop 3 upwards (as shown in Figure 3). The upward movement continues until the scoop 3 strikes the discharge device 15, which enters the narrow open end of the scoop 3 between the blades 5, ejecting the material trapped between the blades 5 so that this falls into the conveyor 10 (as shown in Figure 4). At this stage the auger 11 may be driven to discharge material along the chute 12 and through the discharge opening 13 into the mixer drum 14.

The movement of the scoop 3 is reversed after discharge of the contents of the scoop into the conveyor 10, and the cycle described with reference to Figures 2 to 4 is then repeated at a frequency determined by the speed of operation of the drive motor, which may be controllable.

The dispensing arrangement operates to discharge material from the bin in batches, each batch consisting of a quantity of aggregate or like material which is fairly well defined by the capacity of the scoop 3.

The drive for the apparatus, including the reciprocating angular movement of the scoop 3 and the driving of the auger 11, may be controlled in timed sequence by any convenient means, or may be under manual control.

## Claims

1. A dispensing bin (1) for aggregate and like material, including a scoop (3) which extends longitudinally in the bin (1) and is supported for rotation in the bin about an axis parallel to the longitudinal axis of the bin (1) so that the scoop (3) describes a cylindrical path in the bin, characterised in that it includes means (6, 7) for oscillating the scoop (3) about its axis of rotation so that the scoop moves in one direction through a lower part of the bin to pick up material and then moves in the opposite direction to carry the material to an upper part of the bin (1) where the contents of the scoop are delivered into a discharge conveyor (10) extending longitudinally in the upper part of the bin.

2. A dispensing bin according to Claim 1, characterised in that the scoop (3) has an open mouth (4) facing circumferentially with respect to the cylinder path of movement of the scoop.

3. A dispensing bin according to Claim 2, characterised in that the scoop (3) is defined between a pair of longitudinally extending blades (5) which converge in a circumferential direction away from the mouth (4) of the scoop.

4. A dispensing bin according to any one of the preceding Claims, characterised in that a scoop discharge device (15) is arranged in the upper part of the bin (1) to be struck by the scoop (3) as the latter reaches a position above the discharge conveyor (10), so that the contents of the scoop (3) fall onto the conveyor (10) as the direction of movement of the scoop is reversed.

5. A dispensing bin according to Claim 4 when dependent on Claim 3, characterised in that the scoop discharge device (15) is positioned so that it strikes the narrow end of the scoop (3) formed by the convergent blades (5) as the scoop moves in the said opposite direction in the upper part of the bin (1).

6. A dispensing bin according to Claim 5, characterised in that the scoop (3) is open at its narrow end so that the discharge device (15) enters the scoop to eject the material therefrom.

7. A dispensing bin according to any one of the preceding claims, characterised in that the discharge conveyor (10) comprises an auger (11).

8. A dispensing bin according to any one of the preceding claims, characterised in that the scoop (3) is carried by two arms (6) extending in an arc concentric with the axis of rotation of the scoop at opposite ends of the bin (1).

9. A dispensing bin according to Claim 8, characterised in that the two scoop arms (6) are supported by two wheels (7) rotatable about the axis of rotation of the scoop (3) and counterweighted to balance the weight of the scoop and the scoop arms.

10. A dispensing bin according to Claim 9, characterised in that the wheels (7) are housed in respective compartments (8) at opposite ends of the bin (1) and sealed from the part of the bin used for storage of the aggregate or like material.


**Patentansprüche**

1. Verteilbehälter (1) für Zuschlagstoffe und ähnliches Material, eine Schöpfvorrichtung (3) beinhaltend, die sich der Länge nach im Behälter (1) erstreckt und die zur Drehung im Behälter um eine Achse parallel zur Längsachse des Behälters (1) getragen ist, so daß die Schöpfvorrichtung (3) einen zylindrischen Weg im Behälter beschreibt, dadurch gekennzeichnet, daß er Vorrichtungen (6, 7) beinhaltet, die die Schöpfvorrichtung (3) um ihre Drehachse pendeln lassen, so daß sich die Schöpfvorrichtung in eine Richtung durch einen unteren Teil des Behälters bewegt, um Material aufzunehmen und sich dann in die entgegengesetzte Richtung bewegt, um das Material zu einem oberen Teil des Behälters (1) zu befördern, wo der Inhalt der Schöpfvorrichtung auf ein Entladeförderband (10) übergeben wird, das sich der Länge nach im oberen Teil des Behälters erstreckt.

2. Verteilbehälter gemäß Anspruch 1 dadurch gekennzeichnet, daß die Schöpfvorrichtung (3) eine offene Mündung (4) hat, die umfangsmäßig in Bezug auf den zylindrischen Bewegungsweg der Schöpfvorrichtung liegt.

3. Verteilbehälter gemäß Anspruch 2, dadurch gekennzeichnet, daß die Schöpfvorrichtung (3) von einem Paar sich längsseitig erstreckender Blätter (5) begrenzt ist, die in einer Umfangsrichtung weg von der Mündung der Schöpfvorrichtung konvergieren.

4. Verteilbehälter gemäß einem der vorherigen Ansprüche, dadurch gekennzeichnet, daß eine Entladeeinrichtung (15) der Schöpfvorrichtung im oberen Teil des Behälters (1) angebracht ist, die von der Schöpfvorrichtung (3) zu treffen ist, wenn diese eine Position über dem Entladeförderband (10) erreicht, so daß der Inhalt der Schöpfvorrichtung (3) auf das Förderband (10) fällt, wenn die Bewegungsrichtung der Schöpfvorrichtung umgekehrt wird.

5. Verteilbehälter gemäß Anspruch 4, wenn abhängig von Anspruch 3, dadurch gekennzeichnet, daß die Entladeeinrichtung (15) der Schöpfvorrichtung so positioniert ist, daß sie das enge Ende der Schöpfvorrichtung (3) trifft, das durch die konvergierenden Blätter (5) gebildet wird, wenn sich die Schöpfvorrichtung in die erwähnte, umgekehrte Richtung in den oberen Teil des Behälters (1) bewegt.

6. Verteilbehälter gemäß Anspruch 5, dadurch gekennzeichnet, daß die Schöpfvorrichtung (3) an ihrem engen Ende offen ist, so daß die Entladeeinrichtung (15) in die Schöpfvorrichtung eintritt, um das Material aus dieser herauszustoßen.

7. Verteilbehälter gemäß einem der vorherigen Ansprüche, dadurch gekennzeichnet, daß das Entladeförderband (10) eine Schnecke (11) beinhaltet.

8. Verteilbehälter gemäß einem der vorherigen Ansprüche, dadurch gekennzeichnet, daß die Schöpfvorrichtung (3) durch zwei Arme (6) getragen ist, die sich in einem Bogen konzentrisch zur Drehbewegung der Schöpfvorrichtung an gegenüberliegenden Seiten des Behälters (1) erstrecken.

9. Verteilbehälter gemäß Anspruch 8, dadurch gekennzeichnet, daß die beiden Schöpferarme (6) von zwei Rädern (7) getragen sind, die drehbar um die Drehachse der Schöpfvorrichtung (3) und so ausgewogen sind, daß sie das Gewicht der Schöpfvorrichtung und der Schöpferarme ausgleichen.

10. Verteilbehälter gemäß Anspruch 9, dadurch gekennzeichnet, daß die Räder (7) in entsprechenden Kammern (8) an gegenüberliegenden Seiten des Behälters (1) untergebracht und von dem Teil des Behälters abgetrennt sind, der für die Lagerung von Zuschlagstoffen und ähnlichem Material verwendet wird.


**Revendications**

1. Réservoir de distribution (1) pour des granulats et des matériaux similaires, comportant un godet de prise (3) qui s'étend longitudinalement dans le réservoir (1) et est monté à rotation dans ce réservoir autour d'un axe parallèle à l'axe longitudinal du réservoir (1), si bien que le godet de prise (3) décrit un trajet cylindrique dans le réservoir, caractérisé dans ce qu'il comporte des moyens (6, 7) pour faire osciller le godet de prise (3) autour de son axe de rotation de telle façon que ce godet se déplace dans une direction, à travers la partie inférieure du réservoir, afin de saisir le matériau et qu'il se déplace ensuite dans la direction opposée pour transporter le matériau vers une partie supérieure du réservoir (1) où le contenu du godet de prise est déchargé dans un transporteur d'évacuation (10) s'étendant longitudinalement dans la partie supérieure du réservoir.

2. Réservoir de distribution suivant la revendication 1 caractérisé en ce que le godet de prise (3) a une embouchure ouverte (4) dirigée dans le sens circonférentiel, par rapport au trajet cylindrique du mouvement du godet de prise.

3. Réservoir de distribution suivant la revendication 2 caractérisé en ce que le godet de prise (3) est délimité entre une paire de lames (5) s'étendant longitudinalement, lesquelles convergent, dans le sens circonférentiel, en s'éloignant de l'embouchure (4) du godet de prise.

4. Réservoir de distribution suivant l'une quelconque des revendications précédentes caractérisé en ce qu'un dipositif (15) de déchargement du godet de prise est disposé dans la partie supérieure du réservoir (1) de manière à être rencontré par le godet de prise (3) lorsque ce dernier atteint une position au-dessus du transporteur d'évacuation (10), si bien que le contenu du godet de prise (3) tombe sur le transporteur (10) lorsque la direction du mouvement du godet de prise est inversée.

5. Réservoir de distribution suivant la revendication 4 lorsqu'elle est rattachée à la revendication 3, caractérisé en ce que le dispositif (15) de déchargement du godet de prise est disposé de telle manière qu'il rencontre l'extrémité étroite du godet de prise (3) formée par les lames convergentes (5) tandis que le godet de prise se déplace dans ladite direction opposée dans la partie supérieure du réservoir (1).

6. Réservoir de distribution suivant la revendication 5 caractérisé en ce que le godet de prise (3) est ouvert à son extrémité étroite de telle façon que le dispositif de déchargement (15) pénétre dans ce godet de prise pour éjecter le matériau à partir du godet.

7. Réservoir de distribution suivant l'une quelconque des revendications précédentes caractérisé en ce que le transporteur d'évacuation (10) comprend une vis d'Archimède (11).

8. Réservoir de distribution suivant l'une quelconque des revendications précédentes caractérisé en ce que le godet de prise (3) est porté par deux bras (6) s'étendant suivant un arc concentrique avec l'axe de rotation du godet de prise, aux extrémités opposées du réservoir (1).

9. Réservoir de distribution suivant la revendication 8 caractérisé en ce que les deux bras (6) portant le godet de prise sont supportés par deux roues (7) tournant autour de l'axe de rotation du godet (3) et formant des contrepoids pour équilibrer le poids du godet de prise et des bras le portant.

10. Réservoir de distribution suivant la revendication 9 caractérisé en ce que les roues (7) sont logées dans des compartiments respectifs (8) se trouvant aux extrémités opposées du réservoir (1) et séparés de manière étanche de la partie du réservoir qui est utilisée pour le stockage des granulats ou matériaux similaires.

FIG 1

FIG 2

FIG 3

FIG 4